# FASCICULE DE BREVET EUROPEEN

(11) **EP 0 779 098 B1**
(45) Date de publication et mention de la délivrance du brevet: **11.07.2001**
(21) Numéro de dépôt: 96402678.5
(22) Date de dépôt: 10.12.1996
(51) Int. Cl.: B01J 13/02, B01J 13/10, C09D 11/10, B41M 5/165

(54) **Procédé pour disperser de façon homogène au moins un réactif dans une matrice fluide et produits obtenus**
Verfahren zur homogenen Dispergierung von mindestens einem Reagenz in einer fluiden Matrix und daraus hergestellte Produkte
Process for homogeneous dispersing of at least one reagent in a fluid matrix and products obtained thereof

(30) Priorité: 14.12.1995 FR 9514857
(43) Date de publication de la demande: 18.06.1997
(73) Titulaire: AIMCO WORLD ENTERPRISES INC., Montreal, Quebec H3B 5C9 (CA)
(72) Inventeur: Guillot, Philippe, 33270 Floirac (FR)
(74) Mandataire: Vuillermoz, Bruno

(56) Documents cités:
- EP-A- 0 152 898
- EP-A- 0 321 750
- WO-A-91/16382
- DE-A- 3 335 174
- DATABASE WPI Week 9222 Derwent Publications Ltd., London, GB; AN 92-180206 XP002017332 & JP 04 117 468 A (SEIKO EPSON CORP) , 17 Avril 1992

## Description

La présente invention concerne un procédé pour disperser de façon homogène dans une matrice fluide au moins un réactif non miscible à la matrice ainsi que les produits obtenus par ce procédé.

Le procédé de la présente invention s'applique plus particulièrement à la réalisation de matériaux composites du type encre, dans lesquels un ou plusieurs réactifs dans la matrice présentent à eux seuls, ou par combinaison entre eux, des caractéristiques qui évoluent en fonction d'un paramètre externe prédéterminé, tel que le rayonnement lumineux, notamment ultra-violet, la température, l'humidité et le champ magnétique. Le matériau composite obtenu peut donc servir au contrôle d'un paramètre prédéterminé à l'aide d'un signal visuel ou de tout autre signal. Dans une telle application, la matrice est polymérisable. Ces produits composites doivent pouvoir être mis en oeuvre par tous les moyens classiques, tels que peinture, enduit, imprimerie sous toutes ses formes industrielles, projection d'encre ou d'aérosol. Il est donc nécessaire que le (ou les) réactif(s) soi(en)t réparti(s) de façon très homogène dans la matrice fluide pour éviter la présence d'agglomérats de réactif(s), qui pourraient gêner l'application ou pour éviter la présence de lacunes de réactif(s) dans la couche appliquée qui amèneraient des défauts et des irrégularités dans le signal de contrôle du paramètre déterminé.

Selon la présente invention, on propose un procédé, qui permet, dans une matrice fluide, une répartition très homogène de réactif(s) sous forme de particules et qui permet d'obtenir ainsi un matériau composite, que l'on peut appliquer par tous les moyens classiques en formant des couches très fines, qui ne présentent pas de lacunes en réactif(s) identifiable(s).

La présente invention a donc pour objet un procédé pour disperser de façon homogène au moins un réactif dans une matrice fluide, caractérisé par le fait que l'on prépare avec un premier produit d'encapsulation des capsules d'un premier type contenant le(s) réactif(s) et avec un second produit d'encapsulation compatible avec le premier des capsules d'un second type contenant la matrice fluide, ces deux types de capsules portant des charges électriques de polarité opposée, que l'on associe par attraction électrique les capsules des deux types et qu'on élimine les premier et second produits d'encapsulation de façon à obtenir un matériau composite constitué par la matrice fluide contenant le(s) réactif(s) sous forme de dispersion homogène.

Le procédé selon l'invention comporte, de préférence, les étapes suivantes :
a) on mélange le(s) réactif(s) avec le premier produit d'encapsulation et, éventuellement, avec un premier solvant dudit premier produit d'encapsulation compatible avec le(s)dit(s) réactif(s), de façon à obtenir un mélange pulvérisable,
b) on pulvérise le mélange obtenu de façon à obtenir des capsules contenant le(s) réactif(s) et, parmi ces capsules, on sélectionne les capsules du premier type ayant une charge électrique de polarité déterminée,
c) on met la matrice fluide en émulsion dans le second produit d'encapsulation, éventuellement en présence d'un deuxième solvant susceptible de dissoudre ledit second produit d'encapsulation et compatible avec la matrice fluide, jusqu'à former des gouttelettes de matrice de la taille désirée dans une phase continue constituée par le second produit d'encapsulation, on sélectionne celles des gouttelettes de l'émulsion, qui ont une charge électrique de polarité opposée à celle des capsules du premier type obtenues à l'étape b), lesdites gouttelettes constituant les capsules du second type dans lesquelles la matrice fluide est encapsulée dans une gangue formée du second produit d'encapsulation,
d) on ramollit, à l'aide d'un troisième solvant compatible avec l'un au moins des deux produits d'encapsulation, les parois des capsules de l'un au moins des deux types obtenues dans les étapes b) et c) ci-dessus et on mélange les deux types de capsules de façon à associer par attraction électrique les capsules de réactif(s) et les capsules de matrice fluide dans une phase continue constituée par l'un au moins des deux produits d'encapsulation,
e) on élimine le(s) solvant(s) et on sépare le(s) produit(s) d'encapsulation du mélange obtenu dans l'étape d), de façon à obtenir une matrice fluide dans laquelle le(s) réactif(s) est(sont) dispersé(s) de façon homogène.

On préfère, dans l'étape d), ramollir uniquement les parois des capsules du premier type au moyen d'un solvant du premier produit d'encapsulation. On préfère également utiliser pour les étapes a) et c) le même produit d'encapsulation.

Dans le cadre de la présente demande de brevet, on désignera par le terme "particules" aussi bien des particules solides que des gouttelettes d'un produit sous forme liquide.

Selon l'invention, on désigne par le terme "matrice fluide" une matrice constituée par un produit, plus ou moins visqueux, susceptible de couler quand on penche le récipient dans lequel il est contenu. La matrice peut être constituée principalement d'un monomère ou d'un polymère à bas poids moléculaire.

La matrice peut notamment comporter au moins un polymère fluide ; elle est avantageusement constituée, en majeure partie, par au moins un polymère comportant, dans son motif récurrent, un groupe cyclique, qui peut être un groupe cycloaliphatique, comme le cyclohexane, un groupe cycloalcényle comportant une ou plusieurs liaisons de type éthylénique, comme le pentène, ou un groupe aryle comme les groupes phényle, naphtyle, anthracényle. On utilise, de préférence, un polyester d'un acide comportant un groupe aryle dans sa chaîne principale et d'un polyol aliphatique.

Selon un mode de réalisation préféré, on utilise au moins deux réactifs, qui sont susceptibles de réagir entre eux grâce à une modification, telle qu'un changement de phase, d'au moins l'un des réactifs sous l'effet de la variation d'un paramètre déterminé. On peut prévoir que l'un au moins des réactifs soit solide à température ambiante et soit susceptible de fondre à une température inférieure à la température de dégradation de la matrice et éventuellement aux températures de fusion et dégradation des autres réactifs. On utilise, avantageusement, deux réactifs qui, dans une même zone de température, sont sous forme solide et qui entrent en contact réactionnel l'un avec l'autre, quand l'un des réactifs atteint sa température de fusion. On peut également utiliser un réactif, qui forme une solution en présence d'humidité et dont la solution réagit avec l'autre réactif. L'un des produits peut également devenir gazeux et réagir sous cette forme avec l'autre réactif.

Dans ce mode de réalisation, l'un des réactifs est, par exemple, un composé acide ou basique et l'autre réactif est un produit indicateur de pH, dont l'apparence ou la couleur se modifie quand on fait varier le pH. On peut, notamment, utiliser un acide organique solide ; comme acide, on peut citer, à titre d'exemple, l'acide tartrique (ou acide dihydroxysuccinique) qui fond à 170°C ou l'acide cyclohexyl 3-propionique qui fond à 17°C. Le produit indicateur de pH peut être, par exemple, le sel disodique de l'érythrosine, qui a une couleur orange à un pH de 2,2 et une couleur rouge à un pH de 3,6 ou le bleu de bromophénol, qui change de couleur à pH = 8,5. Lorsque l'acide fond par suite d'une élévation de température, il devient liquide et vient en contact avec l'indicateur de pH de sorte que le matériau composite change de couleur. Lorsque le matériau composite revient à sa température initiale, l'acide se solidifie et le matériau composite revient à sa coloration initiale. Selon l'invention, le matériau composite peut être incolore à la température initiale ou bien il peut devenir incolore par chauffage. On peut également, au cours du processus de chauffage et refroidissement, passer d'un matériau composite transparent à un matériau composite trouble ou opaque ou inversement.

Selon un autre mode de réalisation, on utilise un seul réactif, de préférence sous forme de solution aqueuse. Ce produit peut être un marqueur UV, tel que le trihydrate de quinine additionné d'acide sulfurique dilué, une émulsion photosensible en phase aqueuse ou un sel de néodyme en solution aqueuse, qui permet de donner au matériau composite un magnétisme rémanent et peut donc servir à préparer les antivols magnétiques utilisés dans les magasins.

Les premier et second produits d'encapsulation sont, de préférence, non hydrosolubles. Ils peuvent être différents mais sont, de préférence, identiques : la compatibilité avec le(s) solvant(s) est plus facile à déterminer puisque l'on peut alors utiliser le même solvant aux étapes a, c et d du procédé précédemment défini.

Les produits d'encapsulation sont, de préférence, choisis parmi :
- les cires, qui sont des produits ou mélanges de produits de poids moléculaire élevé, solides à température ambiante. Parmi les cires, on peut citer les cires animales, telles que les cires d'abeille, de lanoline, la gomme-laque et la cire de Chine ; les cires végétales, telles que la cire de Carnauba, de Candellila, d'arbre à cire, de canne à sucre ; des cires d'origine minérale, telles que l'ozocérite, la cérésine, les cires de pétroles et les cires synthétiques, telles que les Carbowax, les naphtalènes chlorés, les cires obtenues par synthèse de Fisher-Tropsch et les cires de silicone ;
- les esters d'acide gras, tels que le tristéarate de glycéryle ou le tripalmitate de glycéryle, et
- les polyesters, qui ont un faible poids moléculaire.

De préférence, on utilise un (des) produit(s) d'encapsulation ayant un domaine pâteux très court, quand on passe du domaine liquide au domaine solide par variation de température.

Pour l'étape c) du procédé selon l'invention, la sélection des capsules du second type portant une charge électrique de polarité déterminée peut se faire en mettant l'ensemble des capsules de l'émulsion en contact avec une surface portant une charge électrique de polarité déterminée sur laquelle les capsules de polarité opposée viennent se fixer. On peut ensuite recueillir les capsules fixées sur ladite surface qui ont toutes la polarité opposée à celle de ladite surface.

Le (ou les) solvant(s) utilisé(s) peu(ven)t être tout solvant susceptible de dissoudre les premier et second produits d'encapsulation et compatible(s) avec la matrice et les différents réactifs, c'est-à-dire en particulier non susceptible(s) de dissoudre ces derniers. De façon avantageuse, on utilise des solvants chlorés tels que le trichloréthylène et le chloroforme. De préférence, on utilise le même solvant aux étapes a), c) et d) du procédé.

Lorsque le(s) réactif(s) est(sont) sous forme solide, avant de le(s) mélanger avec le premier agent d'encapsulation dans l'étape a) du procédé, celui(ceux)-ci est(sont) avantageusement broyé(s) si nécessaire, par exemple jusqu'à une granulométrie inférieure à 1 µm, de préférence de l'ordre du nanomètre. Le broyage est avantageusement effectué à froid avec un broyeur à couteaux.

Dans l'étape a) du procédé selon l'invention, le mélange peut être effectué par tout moyen classique ; il se fait avantageusement dans un appareil de type malaxeur ou pétrisseur. Lorsqu'il y a plusieurs réactifs, on introduit ceux-ci successivement dans le produit d'encapsulation de façon à obtenir un mélange homogène de chacun des réactifs, les particules des différents réactifs étant bien séparées les unes des autres dans une phase continue constituée par le premier agent d'encapsulation. On ajoute éventuellement une petite quantité de solvant pour ajuster la viscosité, de façon à obtenir un mélange pulvérisable.

Dans l'étape b) du procédé selon l'invention, on pulvérise le mélange, de façon connue, à l'aide d'un atomiseur dans lequel la pulvérisation du mélange est effectuée, par exemple à l'aide d'une turbine ou d'une buse, à la partie supérieure d'une tour et on fractionne les gouttelettes de la pulvérisation, tout en éliminant le solvant, à l'aide d'au moins un courant d'air traversant le lit mobile descendant de granules dans le sens du lit mobile et/ou en sens inverse de celui du lit mobile et/ou transversalement par rapport à ce lit mobile. On peut utiliser, de façon connue, un atomiseur à effet simple ou un atomiseur à effet multiple qui comporte, en aval du lit mobile descendant de granules, au moins une zone où les particules sont maintenues en lit fluidisé à l'aide d'au moins un courant gazeux supplémentaire. Les particules formées ont des dimensions qui sont de l'ordre du µm.

Les particules obtenues par ce type de pulvérisation sont chargées les unes positivement et les autres négativement ; on sélectionne les capsules ayant une charge électrique de polarité déterminée, par exemple les capsules chargées négativement. Dans ce but, on dispose dans l'atomiseur au moins une plaque métallique, chargée par exemple négativement, sur laquelle les particules chargées positivement viennent se déposer. De façon avantageuse, on utilise un atomiseur muni à sa partie supérieure d'un dispositif polarisé destiné à éliminer l'électricité statique pour éviter tout risque d'explosion, dispositif sur lequel viennent se fixer les capsules de polarité opposée. On recueille donc à la sortie de l'atomiseur des capsules du premier type ayant en majorité une charge électrique de polarité identique à celle du dispositif polarisé, positive ou négative.

Lorsqu'on utilise au moins deux réactifs, ces réactifs ont été dispersés de façon homogène dans le premier produit d'encapsulation au cours de l'étape a) du procédé, de sorte que, statistiquement, chaque capsule du premier type contient au moins une particule de chacun des réactifs.

Dans l'étape c) du procédé selon l'invention, on prépare les capsules de matrice fluide dans le second produit d'encapsulation. Dans cette étape, on mélange la matrice fluide avec le second produit d'encapsulation, de préférence en présence d'un solvant destiné à fluidifier le second produit d'encapsulation, de façon à obtenir une émulsion homogène. L'émulsion obtenue, qui est globalement électriquement neutre, contient des gouttelettes chargées positivement et des gouttelettes chargées négativement ; ces gouttelettes ont avantageusement des dimensions de l'ordre du µm. On sélectionne, de préférence, les gouttelettes ayant une charge déterminée en plongeant dans l'émulsion une plaque électroconductrice, chargée négativement ou positivement, par exemple à plusieurs kV, sur laquelle viennent se déposer les gouttelettes, qui sont toutes chargées positivement ou négativement, respectivement, ces gouttelettes étant ganguées dans une certaine quantité du second produit d'encapsulation. On peut ensuite extraire la plaque hors de l'émulsion, la déconnecter électriquement et la racler, de façon à obtenir des capsules de charge électrique bien déterminée qui sont constituées par des gouttelettes de résine enrobée par le second produit d'encapsulation.

Dans l'étape d) du procédé selon l'invention, on ramollit à l'aide d'un solvant, de préférence le produit d'encapsulation des capsules du premier type obtenues à l'étape b). On préfère traiter les capsules obtenues à l'étape b), car elles sont généralement plus résistantes. On ajoute ensuite les capsules du deuxième type obtenues à l'étape c) et on soumet le mélange à une agitation très lente de façon à mettre les capsules en contact sans les briser ou les écraser. Du fait que les capsules des premier et deuxième types portent des charges opposées, il se forme des couples ou des paires de capsules, une capsule contenant des réactifs venant se fixer sur une capsule contenant la matrice et, par conséquent, statistiquement dans le mélange on a une répartition homogène des deux types de capsules. On laisse ensuite reposer pour faire démixer les produits d'encapsulation. On peut ajouter une nouvelle quantité de solvant de façon à faire démixer plus vite la totalité des produits d'encapsulation. Au fur et à mesure que les produits d'encapsulation disparaissent, la matrice fluide les remplace, de sorte qu'il reste dans la matrice une dispersion très homogène du contenu des capsules du premier type.

Dans l'étape e), on élimine le(s) solvant(s), généralement par distillation sous vide, et les produits d'encapsulation, généralement par filtration car ils forment des croûtes en l'absence de solvant. Le produit final obtenu est un matériau composite constitué par la matrice fluide, dans laquelle sont dispersées de façon uniforme les particules ou gouttelettes de réactif(s) : selon l'invention, les particules ou gouttelettes de réactif(s) dispersées peuvent avoir des dimensions de l'ordre du nanomètre.

L'invention a aussi pour objet le matériau composite susceptible d'être obtenu par le procédé ci-dessus défini, caractérisé par le fait qu'il comporte une phase continue constituée d'une matrice fluide renfermant une dispersion homogène d'au moins un réactif non miscible à ladite matrice. Plus particulièrment, l'invention a pour objet le matériau composite ci-dessus défini, dans lequel la matrice comporte au moins un monomère ou un polymère à bas poids moléculaire. Plus particulièrement encore, l'invention concerne une encre d'impression comportant une phase continue polymérique où des particules de réactif(s) sont dispersées de façon homogène ; une telle encre peut notamment comporter des agrégats de particules d'au moins deux réactifs dont l'un subit une modification sous l'effet de la variation d'un paramètre extérieur, tel que la température. L'invention couvre donc une encre d'impression comportant une matrice polymérique renfermant de façon homogène, des agrégats de deux réactifs, qui sont solides dans une même zone de température, l'un des réactifs donnant un signal colorimétrique lorsque la température de fusion de l'autre réactif est atteinte.

On va décrire ci-après, à titre purement illustratif et non limitatif, un mode de mise en oeuvre de l'invention, ce qui permettra de mieux comprendre celle-ci.

Dans ce mode de réalisation, deux réactifs solides, à savoir l'acide cyclohexyl 3-propionique, qui a un point de fusion de 17°C, et le sel disodique de l'érythrosine, indicateur de pH qui est orange à pH = 3,2 et rouge à pH = 3,6, sont dispersés dans une matrice de polyester d'acide tétrahydrophtalique et de propylèneglycol. Le polyester utilisé est l'URADIL SZ253 G3Z-50 commercialisé par la société DSM ; ce polyester a l'aspect d'un liquide laiteux, une viscosité à 23°C de 9 à 14 dPa.s, un point d'ébullition de 171°C à 101,3 KPa et un pH de 7,5 à 8,5.

Pour commencer, on broie l'acide cyclohexyl 3-propionique à une température inférieure à 17°C ; à cette température de broyage, ledit acide est sous forme de cristaux d'environ 1 mm. Le broyage est effectué dans un broyeur à couteaux tournant à une vitesse de 20 000 t/min jusqu'à ce que l'on obtienne des particules d'une dimension de l'ordre du nanomètre. Il n'est pas nécessaire de broyer le sel disodique de l'érythrosine qui peut être obtenue, dans le commerce, à une granulométrie inférieure au µm.

Pour effectuer l'étape a) du procédé, on mélange d'abord, à froid, l'acide broyé précédemment préparé avec une cire vendue sous la dénomination commerciale "MIRROR GLAZE" par la société "MEGINAR'S" ; cette cire contient de la cire de Carnauba ; on y ajoute une petite quantité de trichloroéthylène comme solvant. Pour ce faire, dans un malaxeur, on mélange, à vitesse lente et à température ambiante, la cire avec des quantités croissantes d'acide jusqu'à saturation par l'acide : la quantité d'acide ajoutée est de 0,3 g d'acide pour 1 g de cire. On a ajouté une quantité de solvant telle que le mélange final obtenu ait une fluidité permettant d'effectuer ultérieurement sa pulvérisation, ce qui correspond à une viscosité d'environ 25 dPa.s obtenue avec 0,6 g de solvant par gramme de cire.

Lorsque ce premier mélange est terminé, on ajoute 0,1 g de sel disodique de l'érythrosine et on mélange à nouveau jusqu'à obtention d'un mélange homogène à l'oeil nu.

Pour effectuer l'étape b) du procédé, on introduit le mélange obtenu, à température ambiante, dans le réservoir d'un atomiseur à simple effet du type "MSD". L'atomiseur est alimenté sous une pression absolue de 10⁶ Pascals par un débit du mélange précédemment obtenu de 5 kg/h. Il est constitué d'une tour cylindrique de 12 m de haut et de 2 m de diamètre environ qui comporte en partie haute une buse de pulvérisation générant des gouttelettes d'environ 1 µm de diamètre moyen. Un premier flux d'air à 10°C est introduit de haut en bas en amont de la buse de pulvérisation. Un deuxième flux d'air est introduit transversalement par des buses dans la zone médiane de la tour, à une température inférieure à 17°C avec un débit de 100 m³/h. Un troisième flux d'air à 10°C est introduit de bas en haut en bas de la tour avec un débit de 100 m³/h. L'atomiseur est muni à sa partie supérieure d'une plaque tronconique de 360 cm² environ, chargée négativement à 5 kV et destinée à écarter les risques d'explosion par décharge électrostatique. On recueille à la sortie de l'atomiseur 1,1 g de capsules du premier type, dont 92 % sont chargés négativement. Ces capsules ont une granulométrie d'environ 1µm.

Pour réaliser l'étape c), on introduit, dans un mixeur tournant à 18 000 t/min, à une température de 15°C, 1 g du polyester "URADIL" précédemment défini, 2,2 g de la même cire que dans l'étape a) et 1,2 g de trichloréthylène ; on émulsionne pendant 2 à 3 minutes jusqu'à ce qu'on obtienne une composition homogène à l'oeil. On plonge ensuite pendant 5 secondes à trois reprises dans l'émulsion obtenue une plaque métallique de 120 cm² chargée négativement à 5 kV à l'aide d'un multiplicateur de tension tel que décrit dans "Techniques de l'ingénieur", volume E3III / Chapitre E3961-4 / Paragraphe 4,23. Les gouttelettes chargées positivement sont attirées sur la plaque et se déposent sur celle-ci avec une partie de la cire. Par raclage de la plaque, on obtient des capsules du deuxième type toutes chargées positivement, formées de cire entourant des gouttelettes de matrice fluide.

Dans l'étape d), on introduit, dans un récipient muni d'un agitateur rotatif lent (30 t/min) 2 g des capsules du premier type obtenues au cours de l'étape b) et on ajoute 0,2 g de trichloréthylène. Après 2 à 3 minutes d'agitation, on laisse reposer pendant 20 minutes environ, de façon qu'il y ait ramollissement des parois des capsules. On ajoute ensuite 4 g de capsules du deuxième type obtenues dans l'étape c) et on agite très lentement (30 t/min) pendant 2 à 3 minutes, de façon à mettre les deux types de capsules en contact sans les écraser. Les capsules ramollies contenant les réactifs et les capsules contenant la matrice sont attirées électriquement les unes vers les autres et se collent de plus les unes aux autres grâce au fait que la cire des capsules de réactifs est ramollie. On laisse le mélange reposer pendant 3 heures environ : une partie de la cire démixe. On rajoute ensuite une quantité supplémentaire de 1,5 g de trichloréthylène pour dissoudre la cire et la faire entièrement démixer. Après 36 heures, la phase cire est entièrement séparée.

On enlève alors, dans l'étape e), le solvant par distillation sous vide. Il se forme des croûtes de cire que l'on peut éliminer par tamisage sur des tamis de 140 à 225 mailles par cm. La cire ayant été remplacée par la matrice polymère liquide au fur et à mesure de sa démixion, le matériau composite obtenu est constitué par une phase continue formée par la matrice polymère, ladite phase contenant, sous forme de dispersion, des particules solides d'acide cyclohexyl 3-propionique et de sel disodique de l'érythrosine appairées en agrégats.

Lorsque l'on chauffe le produit composite à une température supérieure à 17°C, l'acide cyclohexyl 3-propionique fond et, dans chaque agrégat, une gouttelette de produit fondu ainsi formée vient en contact avec la (ou les) particule(s) solide(s) du sel disodique de l'érythrosine contenue(s) dans le même agrégat. Le composite se colore alors uniformément en orange. Lorsque la température s'abaisse au-dessous de 17°C, l'acide cyclohexyl 3-propionique se resolidifie et la coloration disparaît.

Le composite préparé permet donc, lorsqu'il est appliqué sur un objet, par exemple par impression, de vérifier visuellement si cet objet a une température supérieure ou inférieure à 17°C.

## Revendications

1. Procédé pour disperser de façon homogène au moins un réactif dans une matrice fluide, caractérisé par le fait que l'on prépare avec un premier produit d'encapsulation des capsules d'un premier type contenant le(s) réactif(s) et avec un second produit d'encapsulation compatible avec le premier des capsules d'un second type contenant la matrice fluide, ces deux types de capsules portant des charges électriques de polarité opposée, que l'on associe par attraction électrique les capsules des deux types et qu'on élimine les premier et second produits d'encapsulation de façon à obtenir un composite constitué par la matrice fluide contenant le(s) réactif(s) sous forme de dispersion homogène.

2. Procédé selon la revendication 1, caractérisé par le fait qu'il comporte les étapes suivantes :
a) on mélange le(s) réactif(s) avec le premier produit d'encapsulation et, éventuellement, avec un premier solvant dudit premier produit d'encapsulation compatible avec le(s)dit(s) réactif(s), de façon à obtenir un mélange pulvérisable,
b) on pulvérise le mélange obtenu de façon à obtenir des capsules contenant le(s) réactif(s) et, parmi ces capsules, on sélectionne les capsules du premier type ayant une charge électrique de polarité déterminée,
c) on met la matrice fluide en émulsion dans le second produit d'encapsulation, éventuellement en présence d'un deuxième solvant susceptible de dissoudre ledit second produit d'encapsulation et compatible avec la matrice fluide, jusqu'à former des gouttelettes de matrice de la taille désirée dans une phase continue constituée par le second produit d'encapsulation, on sélectionne celles des gouttelettes de l'émulsion, qui ont une charge électrique de polarité opposée à celle des capsules du premier type obtenues à l'étape b), lesdites gouttelettes constituant les capsules du second type dans lesquelles la matrice fluide est encapsulée dans une gangue formée du second produit d'encapsulation,
d) on ramollit, à l'aide d'un troisième solvant compatible avec l'un au moins des deux produits d'encapsulation, les parois des capsules de l'un au moins des deux types obtenues dans les étapes b) et c) ci-dessus et on mélange les deux types de capsules de façon à associer par attraction électrique les capsules de réactif(s) et les capsules de matrice fluide dans une phase continue constituée par l'un au moins des deux produits d'encapsulation,
e) on élimine le(s) solvant(s) et on sépare le(s) produit(s) d'encapsulation du mélange obtenu dans l'étape d), de façon à obtenir une matrice polymère liquide dans laquelle le(s) réactif(s) est(sont) dispersé(s) de façon homogène.

3. Procédé selon l'une des revendications 1 ou 2, caractérisé par le fait que la matrice fluide est constituée en majeure partie par au moins un polymère comportant, dans son motif récurrent, un groupe cycloaliphatique, cycloalcényle ou aryle.

4. Procédé selon la revendication 3, caractérisé par le fait que la matrice fluide est constituée d'un polyester d'un acide comportant un groupe aryle dans sa chaîne principale et d'un polyol aliphatique.

5. Procédé selon l'une des revendications 1 à 4, caractérisé par le fait qu'on utilise au moins deux réactifs qui sont susceptibles de réagir entre eux grâce à une modification d'au moins l'un des réactifs sous l'effet de la variation d'un paramètre déterminé.

6. Procédé selon la revendication 5, caractérisé par le fait qu'on utilise deux réactifs qui, dans une même zone de température, sont sous forme solide, et qui entrent en contact réactionnel l'un avec l'autre quand l'un des réactifs atteint sa température de fusion.

7. Procédé selon la revendication 6, caractérisé par le fait que l'un des deux réactifs est un composé acide ou basique et l'autre réactif est un produit indicateur de pH, dont l'apparence ou la couleur se modifie quand on fait varier le pH.

8. Procédé selon l'une des revendications 1 à 7, caractérisé par le fait que les premier et second produits d'encapsulation sont non hydrosolubles et identiques.

9. Procédé selon l'une des revendications 1 à 8, caractérisé par le fait que le(s) produit(s) d'encapsulation est(sont) choisi(s) dans le groupe formé par les cires, les esters d'acide gras et les polyesters de faible poids moléculaire.

10. Procédé selon la revendication 9, caractérisé par le fait que le(s) produit(s) d'encapsulation a (ont) un domaine pâteux très court quand on passe du domaine liquide au domaine solide par variation de température.

11. Procédé selon la revendication 2, caractérisé par le fait qu'avant l'étape a), on broie le(s) réactif(s) jusqu'à une granulométrie inférieure à 1 µm.

12. Procédé selon l'une des revendications 2 ou 11, dans lequel on utilise plusieurs réactifs, caractérisé par le fait que, dans l'étape a), on introduit les réactifs successivement dans le produit d'encapsulation.

13. Procédé selon l'une des revendications 2, 11 ou 12 caractérisé par le fait que, dans l'étape b) du procédé, on effectue la pulvérisation dans un atomiseur muni à sa partie supérieure d'un organe chargé électrostatiquement.

14. Procédé selon l'une des revendications 2, ou 11 à 13, caractérisé par le fait que, dans l'étape c), on plonge dans l'émulsion une plaque électroconductrice portant une charge électrique ayant la même polarité que les capsules obtenues à l'étape b) et que l'on racle la plaque pour recueillir des capsules de polarité opposée à celle de la plaque.

15. Procédé selon l'une des revendications 2, ou 11 à 14, caractérisé par le fait que, dans l'étape e), on élimine les premier et second produits d'encapsulation par filtration après extraction du (ou des) solvant(s).

16. Matériau composite susceptible d'être obtenu par le procédé de l'une des revendications 1 à 15, caractérisé par le fait qu'il comporte une phase continue constituée par une matrice fluide renfermant une dispersion homogène d'au moins un réactif non miscible avec ladite matrice.

17. Matériau composite selon la revendication 16, caractérisé par le fait que la matrice comporte au moins un monomère ou un polymère à bas poids moléculaire.

18. Encre d'impression comprenant un matériau selon la revendication 17, caractérisée par le fait qu'elle comporte une matrice polymérique renfermant de façon homogène des agrégats d'au moins deux réactifs, qui sont solides dans une même zone de température, l'un des réactifs donnant un signal colorimétrique lorsque la température de fusion de l'autre réactif est atteinte.

## Claims

1. Process for homogeneously dispersing at least one reactant in a fluid matrix, characterized in that capsules of a first type containing the reactant(s) are prepared with a first encapsulation product; and capsules of a second type containing the fluid matrix are prepared with a second encapsulation product which is compatible with the first, these two types of capsules bearing electric charges of opposite polarity; the capsules of the two types are combined by electric attraction; and the first and second encapsulation products are removed so as to obtain a composite material consisting of the fluid matrix containing the reactant(s) in homogeneous dispersion form.

2. Process according to claim 1, characterized in that it includes the following steps :
a) the reactant(s) is(are) mixed with the first encapsulation product and, optionally, with a first solvent for the said first encapsulation product which is compatible with the said reactant(s), so as to obtain a pulverizable mixture,
b) the mixture obtained is sprayed so as to obtain capsules containing the reactant(s) and, among these capsules, the capsules of the first type having an electric charge of determined polarity are selected,
c) the fluid matrix is emulsified in the second encapsulation product, optionally in the presence of a second solvent which is capable of dissolving the said second encapsulation product and which is compatible with the fluid matrix, until matrix droplets of the desired size are formed in a continuous phase consisting of the second encapsulation product, those droplets of the emulsion which have an electric charge of opposite polarity so that of the capsules of the first type obtained in step b) are selected, the said droplets constituting the capsules of the second type in which the fluid matrix is encapsulated in a coating formed from the second encapsulation product,
d) the walls of the capsules of at least one of the two types obtained in steps b) and c) above are softened using a third solvent which is compatible with at least one of the two encapsulation products, and the two types of capsules are mixed together so as to combine, by electric attraction, the capsules of reactant(s) and the capsules of fluid matrix in a continuous phase consisting of at least one of the two encapsulation products,
e) the solvent(s) is(are) removed and the encapsulation product(s) is(are) separated from the mixture obtained in step d), so as to obtain a liquid polymer matrix in which the reactant(s) is(are) homogeneously dispersed.

3. Process according to either of Claims 1 and 2, charaterized in that the fluid matrix consists mainly of at least one polymer containing, in its repeating unit, a cycloaliphatic, cycloalkenyl or aryl group.

4. Process according to claim 3, characterized in that the fluid matrix consists of a polyester of an acid containing an aryl group in its main chain and of an aliphatic polyol.

5. Process according to one of Claims 1 to 4, characterized in that at least two reactants are used which are capable of reacting together by means of a modification of at least one of the reactants under the effect of varying a determined parameter.

6. Process according to Claim 5, characterized in that two reactants are used which, in the same temperature zone, are in solid form and which come into reactional contact with each other when one of the reactants reaches its melting point.

7. Process according to Claim 6, characterized in that one of the two reactants is an acidic or basic compound and the other reactant is a pH-indicator product whose appearance or colour changes when the pH is changed.

8. Process according to one of Claims 1 to 7, characterized in that the first and second encapsulation products are water-insoluble and identical.

9. Process according to one of claims 1 to 8 characterized in that the encapsulation product(s) is(are) chosen from the group formed by waxes, fatty acid esters and polyesters of low molecular weight.

10. Process according to claim 9, characterized in that the encapsulation product(s) has(have) a very narrow pasty range on passing from the liquid range to the solid range by varying the temperature.

11. Process according to Claim 2, characterized in that before step a), the reactant(s) is(are) ground down to a particle size of less than 1 µm.

12. Process according to either of Claims 2 and 11, in which several reactants are used,
characterized in that in step a), the reactants are introduced successively into the encapsulation product.

13. Process according one of Claims 2, 11 or 12, characterized in that in step b) of the process, or spraying is carried out by a sprayer fitted in its upper part with an electro-statically charged member.

14. Process according to one of Claims 2 or 11 to 13, characterized in that in step c), an electrically conductive plate bearing an electric charge having the same polarity as the capsules obtained in step b) is immersed into the emulsion and the plate is scraped to collect the capsules of polarity opposite to that of the plate.

15. Process according to one of Claims 2 or 11 to 14, characterized in that in step e), the first and second encapsulation products are removed by filtration after extraction of the solvent(s).

16. Composite material which may be obtained by the process of one of Claims 1 to 15,
characterized in that it contains a continuous phase consisting of a fluid matrix containing a homogeneous dispersion of at least one reactant which is immiscible with the said matrix.

17. Composite material according to Claim 16, characterized in that the matrix contains at least one monomer or one polymer of low molecular weight.

18. Printing ink comprising a material according to Claim 17, characterized in that it contains a polymer matrix homogeneously containing aggregates of at least two reactants, which are solid in the same temperature zone, one of the reactants giving a colorimetric signal when the melting point of the other reactant is reached.

## Patentansprüche

1. Verfahren zum homogenen Dispergieren von mindestens einem Reagens in einer fluiden Matrix, dadurch gekennzeichnet, dass mit einem ersten Kapselungsmittel Kapseln eines ersten Typs, welche das/die Reagens/Reagentien enthalten, und mit einem zweiten Kapselungsmittel, das sich mit dem ersten verträgt, Kapseln eines zweiten Typs, welche die fluide Matrix enthalten, hergestellt werden, wobei die beiden Kapseltypen elektrische Ladungen mit einander entgegengesetzter Polarität tragen, dass die Kapseln dieser beiden Typen durch elektrische Anziehungskräfte miteinander verbunden werden und das erste und das zweite Kapselungsmittel derart entfernt werden, dass ein Verbundmaterial erhalten wird, das aus der fluiden Matrix besteht, welche das/die Reagens/Reagentien in Form einer homogenen Dispersion enthält.

2. Verfahren nach Anspruch 1, dadurch gekennzeichnet, dass es die Stufen:
a) Vermischen des/der Reagens/Reagentien mit dem ersten Kapselungsmittel und gegebenenfalls mit einem ersten Lösungsmittel für dieses erste Kapselungsmittel, das sich mit dem/den Reagens/Reagentien verträgt, so dass ein versprühbares Gemisch erhalten wird,
b) Versprühen des erhaltenen Gemischs derart, dass das/die Reagens/Reagentien enthaltende Kapseln erhalten werden, wonach aus diesen Kapseln diejenigen des ersten Typs, die eine elektrische Ladung mit einer bestimmten Polarität besitzen, ausgewählt werden,
c) Emulgieren der fluiden Matrix im zweiten Kapselungsmittel, gegebenenfalls in Gegenwart eines zweiten Lösungsmittels, das in der Lage ist, das zweite Kapselungsmittel zu lösen und sich mit der fluiden Matrix verträgt, bis zur Bildung von Matrixtröpfchen der gewünschten Größe in einer kontinuierlichen Phase, die aus dem zweiten Kapselungsmittel besteht, wonach die Tröpfchen der Emulsion ausgewählt werden, die eine elektrische Ladung besitzen, deren Polarität derjenigen der in Stufe b) erhaltenen Kapseln des ersten Typs entgegengesetzt ist, wobei die Tröpfchen die Kapseln des zweiten Typs bilden, in denen die fluide Matrix in einer Phase eingekapselt ist, die aus dem zweiten Kapselungsmittel gebildet ist,
d) Aufweichen der Wand der Kapseln von mindestens einem der in den vorangegangenen Stufen b) und c) erhaltenen beiden Typen mittels eines dritten Lösungsmittels, das sich mit mindestens einem der zwei Kapselungsmittel verträgt, und derartiges Vermischen der beiden Kapseltypen, dass die Kapseln aus dem/den Reagens/Reagentien mit den Kapseln aus fluider Matrix in einer kontinuierlichen Phase, die aus mindestens einem der zwei Kapselungsmittel besteht, durch elektrische Anziehungskräfte verbunden werden, und
e) Entfernen des/der Lösungsmittel/s und Abtrennen des/der Kapselungsmittel/s aus dem in Stufe d) erhaltenen Gemisch derart, dass eine flüssige Polymermatrix erhalten wird, in welcher das/die Reagens/Reagentien homogen dispergiert ist/sind,
umfasst.

3. Verfahren nach Anspruch 1 oder 2, dadurch gekennzeichnet, dass die fluide Matrix überwiegend aus mindestens einem Polymer besteht, das in seiner Repetiereinheit eine cycloaliphatische, Cycloalkenyl- oder Arylgruppe enthält.

4. Verfahren nach Anspruch 3, dadurch gekennzeichnet, dass die fluide Matrix aus einem Polyester aus einer Säure, die eine Arylgruppe in ihrer Hauptkette umfasst, und einem aliphatischen Polyol besteht.

5. Verfahren nach einem der Ansprüche 1 bis 4, dadurch gekennzeichnet, dass wenigstens zwei Reagentien eingesetzt werden, die in der Lage sind, auf Grund einer Modifizierung mindestens eines der Reagentien unter dem Einfluss der Veränderung eines festgelegten Parameters miteinander zu reagieren.

6. Verfahren nach Anspruch 5, dadurch gekennzeichnet, dass zwei Reagentien eingesetzt werden, die in demselben Temperaturbereich in fester Form vorliegen und miteinander in Reaktionskontakt treten, wenn eines der Reagentien die Schmelztemperatur erreicht.

7. Verfahren nach Anspruch 6, dadurch gekennzeichnet, dass eines der zwei Reagentien eine saure oder basische Verbindung und das andere Reagens ein pH-Wert-Indikator ist, dessen Aussehen oder Farbe sich bei Variierung des pH-Werts ändert.

8. Verfahren nach einem der Ansprüche 1 bis 7, dadurch gekennzeichnet, dass das erste und das zweite Kapselungsmittel identisch und nicht wasserlöslich sind.

9. Verfahren nach einem der Ansprüche 1 bis 8, dadurch gekennzeichnet, dass das/die Kapselungsmittel aus der Gruppe ausgewählt ist/sind, die von Wachsen, Fettsäureestern und Polyestern mit niedrigem Molekulargewicht gebildet wird.

10. Verfahren nach Anspruch 9, dadurch gekennzeichnet, dass das/die Kapselungsmittel einen sehr engen pastösen Bereich hat/haben, wenn durch Temperaturänderung vom flüssigen in den festen Bereich übergegangen wird.

11. Verfahren nach Anspruch 2, dadurch gekennzeichnet, dass vor Stufe a) das/die Reagens/Reagentien bis auf eine Korngröße von unter 1 µm zermahlen wird/werden.

12. Verfahren nach Anspruch 2 oder 11, in welchem mehrere Reagentien eingesetzt werden, dadurch gekennzeichnet, dass in Stufe a) die Reagentien nacheinander zum Kapselungsmittel gegeben werden.

13. Verfahren nach einem der Ansprüche 2, 11 oder 12, dadurch gekennzeichnet, dass in Stufe b) des Verfahrens das Zerstäuben in einem Zerstäuber durchgeführt wird, der im oberen Teil mit einem elektrostatisch aufgeladenen Organ versehen ist.

14. Verfahren nach einem der Ansprüche 2 oder 11 bis 13, dadurch gekennzeichnet, dass in Stufe c) eine elektrisch leitfähige Platte, die eine elektrische Ladung trägt, welche dieselbe Polarität wie die in Stufe b) erhaltenen Kapseln besitzt, in die Emulsion getaucht wird, und dass die Platte abgezogen wird, um Kapseln zu gewinnen, deren Polarität derjenigen der Platte entgegengesetzt ist.

15. Verfahren nach einem der Ansprüche 2 oder 11 bis 14, dadurch gekennzeichnet, dass in Stufe e) das erste und das zweite Kapselungsmittel nach Extraktion des/der Lösungsmittel/s durch Filtration entfernt werden.

16. Verbundmaterial, das durch das Verfahren nach einem der Ansprüche 1 bis 15 erhalten werden kann, dadurch gekennzeichnet, dass es eine kontinuierliche Phase umfasst, die aus einer fluiden Matrix besteht, die eine homogene Dispersion mindestens eines Reagens einschließt, das nicht mit der Matrix mischbar ist.

17. Verbundmaterial nach Anspruch 16, dadurch gekennzeichnet, dass die Matrix mindestens ein Monomer oder ein Polymer mit niedrigem Molekulargewicht enthält.

18. Druckfarbe, die ein Material nach Anspruch 17 umfasst, dadurch gekennzeichnet, dass sie eine polymere Matrix enthält, welche Aggregate von mindestens zwei Reagentien homogen einschließt, die in demselben Temperaturbereich fest sind, wobei eines der Reagentien ein kolorimetrisches Signal liefert, wenn die Schmelztemperatur des anderen Reagens erreicht ist.
